# EUROPEAN PATENT APPLICATION

(11) **EP 1 283 631 A2**
(43) Date of publication of application: **12.02.2003**
(21) Application number: 02255485.1
(22) Date of filing: 06.08.2002
(51) Int. Cl.: H04L 29/06, H04L 12/22

(54) **Web based applications single sign on system and method**

(30) Priority: 06.08.2001 US 310530 P; 22.04.2002 US 128415
(71) Applicant: SUN MICROSYSTEMS, INC., Palo Alto, California 94303 (US)
(72) Inventor: Bhat, Shivaram, Sunnyvale, California 94087 (US); Ranganathan, Aravindan, San Jose, California 95127 (US); Allavarpu, Sai, Pleasanton, California 94566 (US)
(74) Representative: Potter, Julian Mark

(57) **Abstract**

In an enterprise server system having a server, a web-base applications single sign-on method and system. The single sign-on system includes logic for assigning and retrieving uniquely identifying tokens that are assigned to a user attempting to access one of many applications in the server. The token is assigned after the user has successfully logged into the server. The assigned token enables the user to access different applications in the server without having to authenticate every time the user goes from one application to the other. In one embodiment of the present invention, the single sign-on system includes a token that provides a listening mechanism for the applications that need to be notified when a token expires in order to deny access to the particular user identified with the expired token.

## Description

### CROSS REFERENCE TO RELATED APPLICATION

This is related to Shivaram Bhat et al., co-filed U.S. patent application Ser. No.: 10/127,898, filed on April 22, 2002, titled "UNIFORM RESOURCE LOCATOR ACCESS MANAGEMENT AND CONTROL SYSTEM AND METHOD", attorney docket No.: SUN/P6854/ACM/DKA. To the extent not repeated herein, the contents of this patent application are incorporated herein by reference.

The present invention relates generally to the field of corporate cntcrprisc server systems. More particularly, embodiment of the present claimed invention relates tu access requests in an Internet server system environment.

The Internet has become a dominant vehicle for data communications with a vast collection of computing resources, interconnected as a network from sites around the world. With the growth of Internet usage has come a corresponding growth in the usage of Internet devices, wireless devices and services in ways different from the traditional uses of such devices.

The growing base of Internet users has become accustomed to readily accessing Internet-based cervices, which traditionally were restricted or limited to the "client/server" environment, at any time from any location. Accessibility of traditional business services and products over the Internet means enterprises need to adjust to new paradigms of business transaction.

Consequently, some organizations are, for example, implementing a variety of business resources and services. As businesses migrate to implementing numerous business applications on the Internet and web-based applications become pervasive in the enterprise business environment, businesses must find ways to protect their valuable resources and services over the Internet.

To achieve this, business may implement several access authentication schemes in order to ascertain valid user access to such resources. To access protected resources or services, users within a typical business enterprise environment must authenticate themselves to access web-based resources.

In this way, business organizations are making a transition from unsophisticated network infrastructure to a sophisticated network infrastructure. Additionally, directory services are becoming an essential part of today's network-centric computing infrastructure. In making such a transition, efficient management of services and resources offered by such intelligent networks become critical. Today, many organizations have mission critical applications for users and policies on individually configurable desktop machines. This time-consuming individual configuration process is unsuitable for enterprises and service providers seeking to create intelligent networks.

User management and policy based tools for managing services are becoming an important requisite for intelligent networks which should be capable of dynamically providing services. Furthermore, as businesses extend their intranet services to extranets to include suppliers, business partners, and customers providing access control increases in size and complexity. Organizations responding to the rapidly changing conditions of today's business environments, need to simplify and automate the configuration and control of their services.

Directory-enabled applications also now power many important processes of an enterprise, including resource planning, value chain-management, security and firewalls, and resource provision. Directory services also play a key role in the deployment of e-business and extranet applications.

One of the drivers behind the widespread market adoption of directory services is the momentum of the open Lightweight Directory Access Protocol (LDAP) standard, which provides a common language for applications and servers regardless of the underlying operating environment. As organizations learn to move with more financial, organizational and competitive agility in the market place, decisions about directory services infrastructure have a direct effect on business processes and the bottom line.

Online directories that support the LDAP have become critical components of e-business infrastructure, supporting identity and risk management in several important roles. They provide a dynamic and flexible means of storing information and retrieving it over the Internet. LDAP directories can also be configured to use the Secure Sockets Layer (SSL) or Transport Layer Security (TLS) protocols for authenticated communications. As protected repositories of personal information, LDAP directories are also a key component for the personalized delivery of services to users of the directory and personalized treatment of information contained in the directory.

In general, an LDAP directory is a specialized database that is read or searched far more often that it is written to, with a flexible mechanism for ongoing changes in the types of information that can be stored.

Today, directories exist in a multitude of applications ranging from operating system management systems, PBX's badge security systems, and HR systems to email and database applications. The cost of implementing and administrating these disparate proprietary directories is great because each one must be managed independently thereby causing enormous administrative burdens and costs to already strained IT budgets. However, LDAP compliant systems leverage a single, master directory that contains all user access control information.

This directory server becomes the central repository for group and single access control information to all applications on the network. The business value of a unified directory is compelling. Unified directories eliminate redundancy which lowers management costs. In addition, unified directories ensure that applications can run within and outside of an organization so that partners, customers and vendors may participate in network applications where appropriate.

Furthermore, policy and management are consistent with that direction. Policy and user management leverage the directory as central policy repositories that allows a variety of servers and applications to share a consistent set of policies and user databases.

Additionally, organizations need to implement user access authentication and authorization schemes to enable user access to corporate resources and services. There are several ways to which users authentication and access policies can be entered.

Each application that a user tries to access may check whether the user is authenticated and, if authenticated, whether the user can access the requested resource. From a security perspective, the fact that a user can access an application even if the user is not authenticated or authorized may not be acceptable.

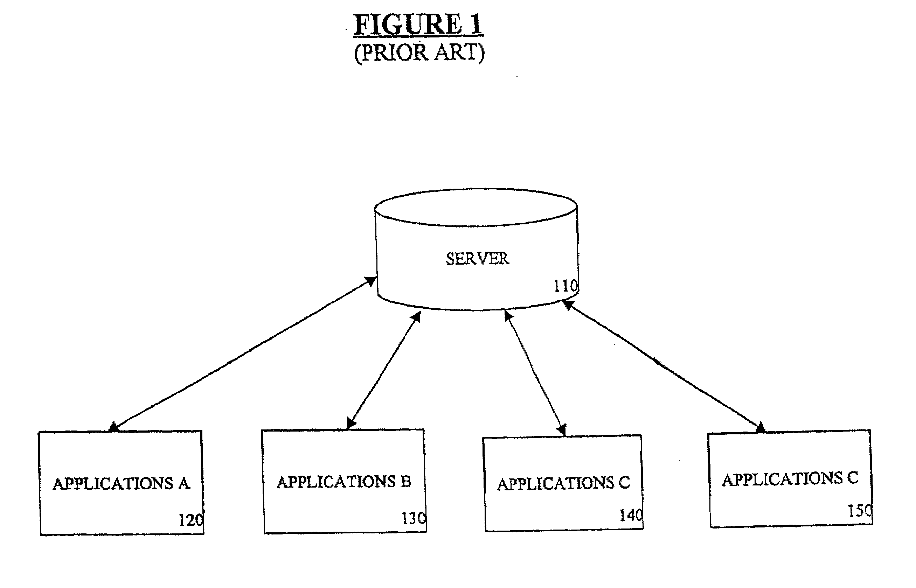

Figure 1 is a block diagram illustration of a directory service environment. The directory service environment depicted in Figure 1 comprises an enterprise server 110 and applications 120 - 150. In the environment depicted in Figure 1, a user can directly access each of applications 120 -150. Access to each of applications 120 -150 is subject to the user being authenticated by each individual application.

In the environment depicted in Figure 1, for the user to access protected resources or services, the user must authenticate. If the user authenticates successfully and if the user is authorized to access the resources, the user is given access to the resource. User access is subject to the user presenting a valid password specific to each application in order to access the particular application. This can be time consuming, especially, if the user has to work with multiple applications simultaneously, switching back and forth, etc.

There are several ways in which the user's authentication and access policies can be enforced. Each application the user is trying to access may check whether the user is authenticated and if authenticated, whether the user can access the requested resource. From a security point of view, the fact that the user can access an application even if the user is not authenticated or authorized may not be acceptable. Ideally, the user should not access an application or a resource if the user is not authenticated or authorized to use that resource or application.

Accordingly, in order to prevent an authenticated or unauthorized access to web resources, there should be a way to verify user's credentials before the user requests get sent to the requested resource or get serviced by the web or directory server. There must also be, or it is desirable that there be, a way to allow the user to authenticate once to access multiple applications in an enterprise server without requiring the user to authenticate each time the user accesses an application.

As the number of business applications on the Internet increases, enterprise system users are looking for an easy way to access multiple applications in a web based application environment without the inefficiencies of the prior art, an Internet infrastructure system is needed that has extensibility capabilities to allow access authentication and authorization to web-based resources and services in a business enterprise environment. Further, a need exists for a system and method of tracking user access to network resources and application services in order to provide authentication and authorization of user access requests within a business environment. A need further exists for "out-of-the-box" solutions to allow technically unsophisticated end-users to connect to the Internet and access sophisticated web-based applications and resource requests without having to manually authenticate with each application or resource on each access. A need further exists for an improved and less costly device independent system, which improves efficiency and provides access to web-based content to various users of different configurations without losing the embedded features designed for these devices.

What is described, in one embodiment, is a single sign-on system having a server supporting a robust authentication and authorization system. This system provides access to welt-based application resources and services in a corporate directory server system. In one embodiment of the present invention, the single sign-on system includes an authentication service system that authenticates user access requests to the directory server. The user access request is typically directed to web-based software applications and services which may be specific to an organization or an entity.

In one embodiment of the present invention, the authentication service system additionally includes a user agent policy system that enforces user access policy to applications in the directory server/web server environment

An embodiment of the present invention further includes a session service that monitors a user's session after the user has been authenticated to access particular files or resources in the directory server/web server. The session service provides an embodiment of the present invention with the ability to bypass user re-authentication after the user has been initially authenticated and validated.

Embodiments of the present invention are directed to a system and a method for accepting user login request to the enterprise server to access pre-defined files and applications specific to the particular user and authenticating the user's request to these applications. Embodiments of the present invention uses the initial user password provided to the enterprise server during authentication to grant access to subsequent applications the user may want to access after the initial login sequence.

Embodiments of the present invention include a single sign-on module that is implemented as part of the server modules in an enterprise server system. The single sign-on module includes logic that allows the user to use a single password to access a number of applications in the server after authentication and authorization by the server.

Embodiments of the present invention include an authentication service module. The authentication service module which provides methods for the user to authenticate to the server. In embodiments of the present invention, the user may authenticate to the server by several methods that may include user authentication credentials such as user name, a user password, user organization, etc.

Embodiments of the present invention further include a session service. The session service establishes a session during a user authentication sequence so that the user can be identified across different requests made to the server.

Embodiments of the present invention further include a profile service module that is used to get and track the user profile of users access URLs in the server. Embodiments of the present invention also include a URL access service that uses an extensible markup language (XML) over a hypertext transport protocol (HTTP) interface of the authentication service and profile services, respectively, to validate a user's request. The URL access service validates a user's credentials thereby enforcing the user's URL access policy to resources and applications in the server.

To achieve the URL access control of embodiments of the present invention, embodiments also provide a software implemented process that is based on a URL access service using the XML interface to validate user requests to a particular URL. In the embodiment of the present invention, each user request to an enterprise server is intercepted by the URL access service to determine whether to grant access to a required URL or not. Embodiments of the present invention may include cookie technology as part of the request URLs. The request is presented to a session service in the enterprise server to validate the user's credentials. If the user's credentials that are valid, the request proceeds further to the URL access enforcement logic to be processed.

Embodiments of the present invention further include URL enforcement logic. The URL enforcement logic provides the directory server with the ability to process user valid URL requests. If a user's request has valid user credentials, the request proceeds further for URL access enforcement. However, if the credentials are not valid, the user is requested to authenticate to the server.

Embodiments of the present invention further include logic to authenticate and authorize users access to a URL. This is achieved by implementing a URL access service that sends a request to the profile service to retrieve a user's URL access policy.

Embodiments of the present invention also include fail-over logic. The fail-over logic enables the URL policy enforcement service to configure a secondary server independent of the primary server when a primary server fails.

Embodiments of the invention include a token identification system and method that uniquely identifies an authenticated user to specific applications within the applications environment. The token identification process sets a unique identifier after the user's request (to particular applications in the server) is authenticated and validated. The unique identifier allows embodiments of the present invention to track the user's session activities within specific applications. These application have pre-defined rights and privileges that may be set to determine which users, entities, sub-applications may have access to a particular application.

These and other objects and advantages of embodiments of the present invention will no doubt become obvious to those of ordinary skill in the art after having read the following detailed description of the preferred embodiments which are illustrated in the various drawing figures.

The accompanying drawings, which are incorporated in and form a part of this specification, illustrates embodiments of the invention and, together with the description, serve to explain the principles of the invention:
Figure 1 is a block diagram of an Internet infrastructure environment of the prior art;
Figure 2 is a block diagram of one embodiment of the Internet infrastructure of an embodiment of the present invention;
Figure 3 is a block diagram of one embodiment of the server of an embodiment of the present invention;
Figure 4 is a block diagram of an embodiment of the architecture of the applications and resource access authentication and authorization system of an embodiment of the present invention;
Figure 5 is a block diagram of one embodiment of the single sign-on service module of Figure 3; and
Figure 6 is a block diagram of an illustrative process flow implementation of a single sign-on process of an embodiment of the present invention.

Reference will now be made in detail to the preferred embodiments of the invention, examples of which are illustrated in the accompanying drawings. While aspects of the invention will be described in conjunction with the preferred embodiments, it will be understood that they are not intended to limit the invention to these embodiments.

On the contrary, the invention is intended to cover alternatives, modifications and equivalents, which may be included within the spirit and scope of the invention as defined by the appended Claims. Furthermore, in the following detailed description of embodiments of the present invention, numerous specific details are set forth in order to provide a thorough understanding of the present invpntion. However, it will be obvious to one of ordinary skill in the art that the present invention may be practiced without these specific details. In other instances, well-known methods, procedures, components, and circuits have not been described in detail as not to unnecessarily obscure aspects of the present invention.

Embodiments of the invention are directed to a system, an architecture, subsystem and method to manage and control access to a uniform resource locator (URL) resources and applications in a network environment in a way superior to the prior art. In accordance with an aspect of the invention, a single sign-on system in an Internet server system provides user access to resources and applications stored in a server connected to the Internet.

In the following detailed description of an embodiment of the present invention, a system and method for an Internet protocol-based resource and applications access system are described. Numerous specific details are not set forth in order to provide a thorough understanding of the present invention. However, it will be recognized by one skilled in the art that the present invention may be practiced without these specific details or with equivalents thereof.

Generally, an aspect of the invention encompasses providing a single sign-on system to web-based applications which provides access to a wide range of applications and other services to online users who may connect to an enterprise server system.

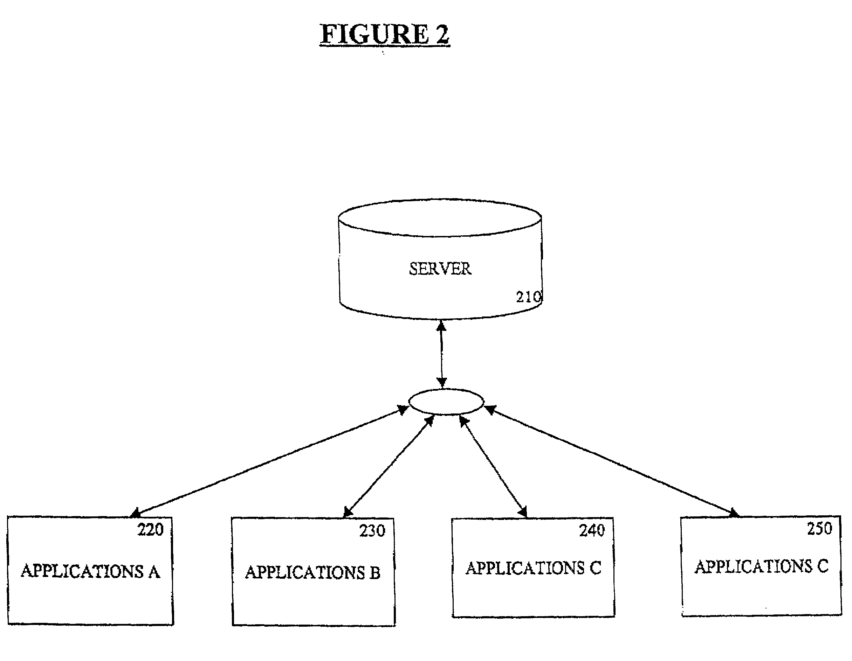

Figure 2 is a block diagram illustration of a server environment. The server environment depicted in Figure 2 comprises a server 210 and applications 220 - 250. In the environment depicted in Figure 2, a user can directly access each of applications 220 -250. Access to URLs in each of applications 220 -250 is subject to the user being authenticated by each individual application.

In the environment depicted in Figure 2, for the user to access protected resources or services, the user must authenticate. If the user authenticates successfully and if the user is authorized to access the resources, the user is given access to the resource. In the environment shown in Figure 2, a user's URL request to applications 220 -250 is centrally handled by a URL access service of an embodiment of the present invention in server 210. The server 210 of an embodiment of the present invention may be a portal server, a directory server, a web-server or the like.

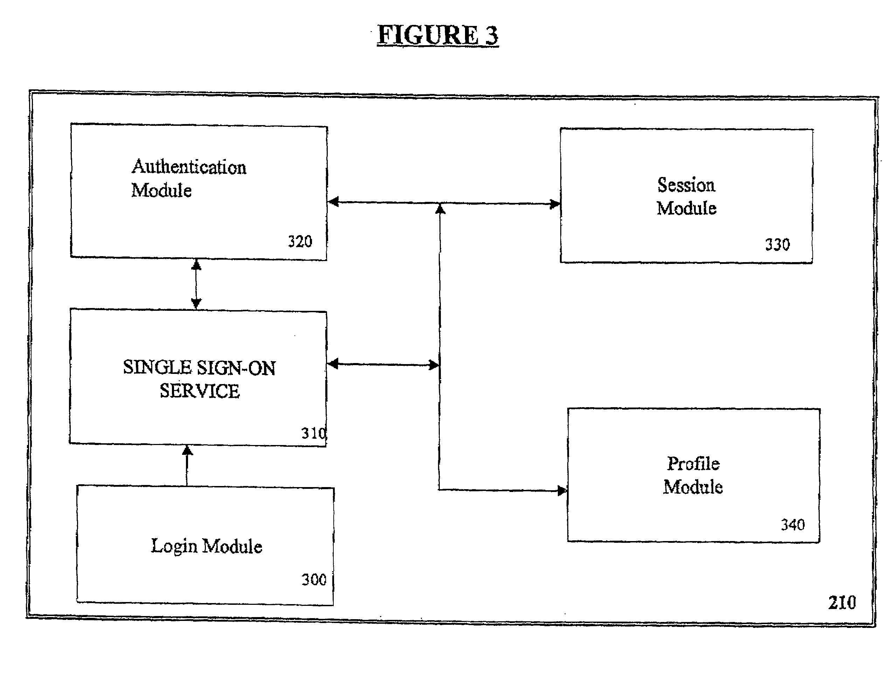

Figure 3 is a block diagram depiction of one embodiment of the server of the present invention. In the Illustrative directory shown in Figure 3, the server 210 cumprises login module 300, single sign on service module 310, authentication module 320, session module 330 and profile module 340.

The authentication module 320 provides the single sign on service authentication of embodiments of the present invention. The authentication module 320 provides the server 210 (Figure 2) with the logic and option to protect Internet software applications and services from unauthorized authenticated users of these applications.

The authentication module of Figure 3 further provides the server 210 with the access implementation logic to selectively allow access to specified applications and services within enterprise organizations. By selectively allowing only authorized and authenticated users access to particular files within an organizations file database, the authentication module 320 ensures that corporate enterprise resources are efficiently and effectively utilized.

Further, the authentication module 320 allows authenticated users of the server 210 with continuous and uninterrupted use of resources and applications available on the server 210 without needing to login into each application the user attempts to access.

The login module 300 provides login services to the server 210. Login module 300 includes logic to enable the tracking of a user's password to enable the single-sign-on (SSO) services to function in the server 210.

Still referring to Figure 3, single sign on service module 310 controls and keeps track of user identification once the user is authenticated. The user identification contains information such as the user's name, the user's authentication method, the user's authentication level, etc. The single sign on service module 310 provides a mechanism by which users need to authenticate only once and access multiple web-based applications without having to re-authenticate. Additionally, the single sign on service module 310 provides interfaces for applications to store generic key-value pairs and to register callback listeners, which are invoked when a single sign on token is destroyed.

The session module 330 provides a session tracking mechanism to enable the authentication logic of embodiments of the present invention to track a user's login session to the server 210. The session module 330 logs the user's access of each application for which the user is authenticated to access. By logging the user's access to applications on the server 210, the authentication module is able to automatically authenticate the user's access to subsequent applications, after the initial login, without requiring a separate manual re-login.

The profile module 340 provides user profile information to the authentication module 320. The profile module 340 provides an XML over http(s) interface for obtaining user, service and policy information. A user's profile information typically includes the user-name, the user's password, the user's entity within a particular organization.

The profile information further defines the user's application access rights which determine or set forth user's rights to files and directory within applications and resources in server 210. The profile module 340 is ideally suitable for policy enforcement agents.

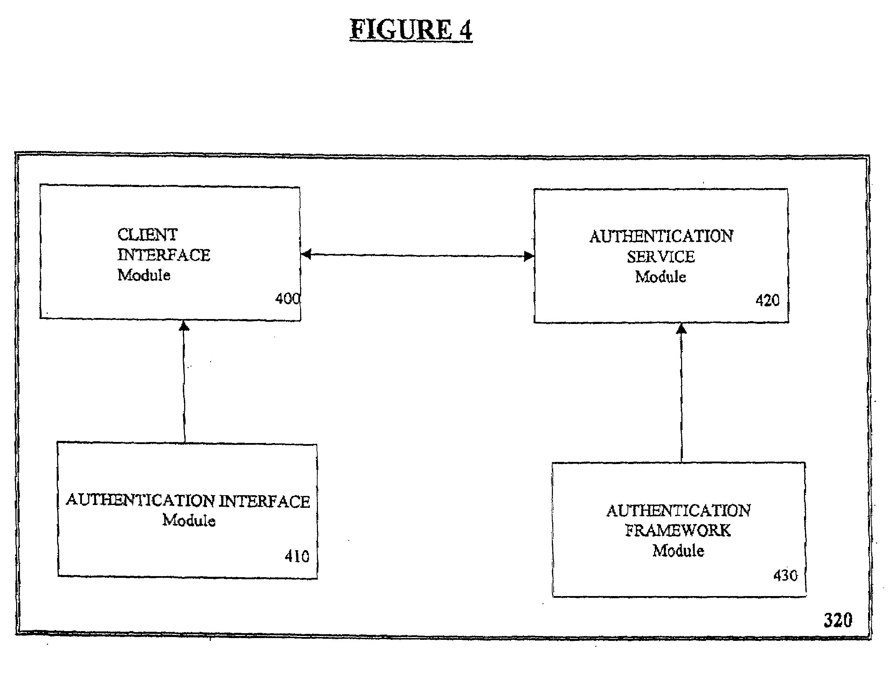

Figure 4 is a block diagram illustration of an internal architecture of one embodiment of the authentication module 320 of the present invention. As shown in Figure 4, the authentication module 320 comprises client interface module 400, authentication interface module 410, authentication service module 420 and authentication framework module 430.

The client interface module 400 provides a plurality of dient interfaces. The first of these is an interface to the authentication service 320 which provides an HTML interface, and the other is in the form of Java interface which provides Java interfaces. Although there are two client interfaces, both use the same underlying authentication framework and authentication modules.

The authentication services module 420 is provided as a service within a servlet container using Java Servlet in one embodiment. Thus, the authentication service module 420 can be deployed in a web server and an applications server that support a servlet container. The client interface module 400 provided by the authentication service module 420 is HTML over HTTP(s), which makes it convenient to use with a web browser. Since most Internet service providers provide Internet solutions via a web browser, using the client interface 400 provides the user with one means of utilizing the embodiments of the present invention.

In a typical implementation of an embodiment of the present invention, the authentication service module 420 (which is implemented as a URL) is presented as a login page which an organization or users are re-directed to an authentication process when users access a resource that is protected. The authentication service module 420 guides the user through a series of one or more screens for credentials gathering (like user name, password, employee number, etc.), based on the requirements of the authentication modules that are configured.

For simple authentication modules like LDAP and Unix, the required credentials may be a user name and password and may be obtained in one screen. However, for complicated challenged-response type authentication algorithms, more login screens would be required.

Once the user has provided the required credentials, the authentication service module 420 relies on the authentication framework module 430 to determine if the user has been successfully authenticated. If the authentication is successful, the user is re-directed to organizations or service home page (URL). If the authentication process fails, the user is re-directed to an error page (URL). Both of the re-direction URLs are configurable by the system administrator.

Once a user has authenticated successfully, the user is issued an encrypted login token identity using the cookie or URL-rewriting mechanism provided by HTTP in one embodiment. The login token is used to access different applications without having to re-authenticate.

The authentication framework module 430 couples the client interface module 400 to the authentication service module 420. The authentication framework module 430 provides the configuration of authentication modules in the authentication service module 420 based on an organization or a user. The authentication framework module 430 further provides a chaining mechanism for the authentication modules in authentication service module 420.

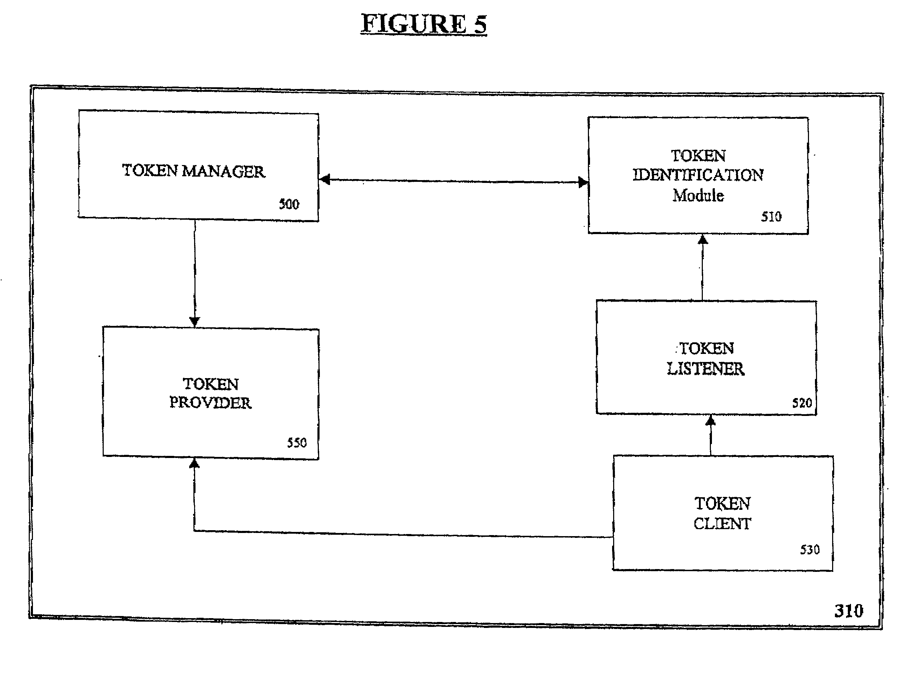

Figure 5 is block diagram depiction of one embodiment of the single sign on service module 310 of the present invention. As shown in Figure 5, the single sign on service module 310 comprise token manager 500, token provider 550, token identification module 510, token listener 520 and token dient 530.

As mention in previous sections, once the user has been authenticated, it is possible to get a single sign on token (SSO token). This token is the basis for providing a single sign on solution in the server 210, All the server 210 services and interfaces require a valid SSO token in order to process a user's request to access a particular service or application in the server 210. Other applications wishing to participate in the SSO solution must use the SSO token to validate the user's identity.

Token manager 500 provides and maintains a configuration database of the valid SSO providers (e.g., valid implementations for SSO Provider, SSOToken and SSOTokenID). A request to the token manager 500 gets delegated to the token provider module 550. In one embodiment of the present invention, the token manager 500 comprises multiple SSO providers. There can be a set of configurations used by the token manager 500 to determine which provider to use for a particular case. Furthermore, the providers implement interfaces made public by the single sign-on module 310. Implementing such interfaces gives the sign-on module 310 the flexibility of adding additional providers by implementing that interface or re-implementing a provider with a different implementation to replace an existing provider.

Token provider 550 provides the SSO tokens that contain crucial information about a particular token. The token provider 550 encrypts the SSO token id and all its attributes (including properties) before storing them in an HTTP session. This is done for security reasons, since it is possible for other servlets within server 210 to receive crucial information and possibly modify the SSO token id and its attributes. Additionally, where the user's request is presented in the form of a cookie, which contains the SSO token id, the cookie can be used to verify the validity of the encrypted SSO token in the HTTP session.

The token identification module 510 stores the SSO token ids that are used by the token manager 500 to validate the user's request to the server 210.

Still referring to Figure 5, the SSO token provides a listener mechanism via token listener 520 for applications that need notification when the SSO token expires. The SSO token could expire because it could have reached a maximum. allowable session time, or idle time, or an administrator could have terminated the session.

Applications that require notification must register a callback object (which implements SSO tokenlistener interface) with the SSO token. The callback object is invoked when the SSO token expires. Applications can also determine the time and the cause for the SSO token to expire.

The token client 530 stores the application program interfaces (APIs) for the single sign on solution of embodiments of the present invention. The token client 530 also stores the authentication policies for the various APIs that the SSO module 310 uses.

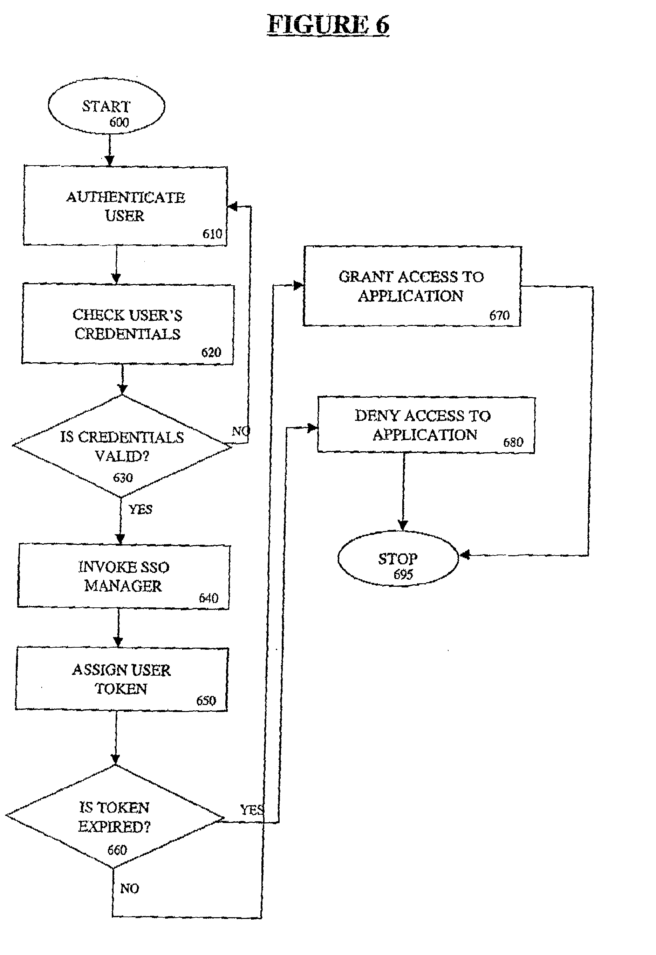

Figure 6 represents a flow diagram depiction of an Illustrative process flow in accordance with one embodiment of the single sign-on access processing of the present invention. The steps performed by the diagram of Figure 6 are performed by a computer system processor executing memory stored instructions which make up a program or application.

As shown in Figure 6, the processing of a user's single sign-on access request is initiated at step 600 when a user's URL request is presented to the single sign-on access service module 310. At step 610, the user is authenticated via the authentication service 330. Upon authenticating, the user's credentials are checked at processing step 620 to ensure the user is authorized to access the web-based applications participating in the single sign-on solution of embodiments of the present invention in server 210. In one embodiment of the present invention, the user's credential includes the user's login name, the user's password and the organization or entity the user belongs to within the enterprise.

At step 630, if the check of the user's credentials results in invalid credentials, the user is requested to re-authenticate at processing step 610. If, on the other hand, the user's request includes valid user credentials, the single sign-on token manager is invoked at processing step 640. In embodiments of the present invention, the single sign-on token manager maintains and retrieves valid single sign-on tokens that are provided to authorized and validated user.

At step 650, a valid user is assigned an identifying token to enable the user access to a suite of identified and permitted applications in server 210. In embodiments of the present invention, the tokens assigned to a validated user include listener logic for applications that need notification when the tokens expire at step 660. If the token assigned to an authenticated user expires, the user is denied access to authorized applications at step 680, and the single sign-on processing of user URL access requests terminates at step 695.

At step 670, if the user assigned token has not expired, the user is granted access to the authorized applications which the user can access. This access is allowed without the user needing to re-login to any of the suite of applications. The user can enter or exit applications at will without having to login to these applications while the token is valid during a session.

In broad summary, this disclosure has revealed an enterprise server system having a server, a web-base applications single sign-on method and system. The single sign-on system includes logic for assigning and retrieving uniquely identifying tokens that are assigned to a user attempting to access one of many applications in the server. The token is assigned after the user has successfully logged into the server. The assigned token enables the user to access different applications in the server without having to authenticate every time the user goes from one application to the other. In one embodiment of the present invention, the single sign-on system includes a token that provides a listening mechanism for the applications that need to be notified when a token expires in order to deny access to the particular user identified with the expired token.

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order to best explain the principles of the invention and its practical application, to thereby enable others skilled in the art to best utilize the invention and various embodiments with various modifications are suited to the particular use contemplated. It is intended that the scope of the invention be defined by the Claims appended hereto and their equivalents.

For example, embodiments of the present invention are not limited to implementations on the Internet, but may be implemented in or as part of any suitable communications network.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

For the avoidance of doubt, the term "comprising" used in the description and claims should not be construed to mean only "consisting only of".

Insofar as embodiments of the invention described above are implementable, at least in part, using a software-controlled programmable processing device such as a Digital Signal Processor, microprocessor, other processing devices, data processing apparatus or computer system, it will be appreciated that a computer program or program element for configuring a programmable device, apparatus or system to implement the foregoing described methods, mechanisms and/or modules is envisaged as an aspect of the present invention. The computer program or program element may be embodied as source code and undergo compilation for implementation on a processing device, apparatus or system, or may be embodied as object code, for example. The skilled person would readily understand that the term computer in its most general sense encompasses programmable devices such as referred to above, and data processing apparatus and computer systems.

Suitably, the computer program or program element is stored on a carrier medium in machine or device readable form, for example in solid-state memory, optical or magneto-optical memory such as a readable and/or writable disk for example a compact disk and a digital versatile disk, or magnetic memory such as disc or tape, and the processing device utilises the program, program element or a part thereof to configure it for operation. The computer program or program element may be supplied from a remote source embodied in a communications medium such as an electronic signal, including radio frequency carrier wave or optical carrier wave. Such carrier media are also envisaged as aspects of the present invention.

## Claims

1. A server system for having web-based applications and services, comprising:
an authentication module for authenticating user credentials for users attempting to connect to said server system;
a session module coupled to said authentication module to monitor users access to said server system after a user has successfully authenticated to said server system;
a profile module coupled to said session module to store user profile information of said user upon said user successfully authenticating to said server system; and
a single sign-on module coupled to said authentication module for providing a single sign on service to said user across several web-based applications in said server provided said user has successfully authenticated in said server system and after an initial sign on.

2. The server system of Claim 1, wherein said single sign-on module comprises a single sign-on token for uniquely identifying a successfully amthenticated user during a login sequence in said server system.

3. The server system of Claim 2, wherein said single sign-on module uses said token to validate an identity of said user during a user access request to said web-based applications in said server system.

4. The server system of Claim 2 or 3, wherein said single sign-on module further comprises a token manager for providing and maintaining validation sequences to validate said tokens.

5. The server system of Claim 4, wherein said token manager further retrieves validated tokens associated with said user that has been successfully authenticated.

6. The server system of any one of claims 2 to 5, wherein said single sign-on module further comprises token providers for providing and encrypting said tokens and corresponding attributes for storage in an Internet based applications protocol.

7. The server system of Claim 6, wherein said Internet based applications protocol is substantially compliant with a hypertext transport protocol.

8. The server system of any one of claims 2 to 7, wherein said single sign-on module further comprises token listening logic for notifying each of said web-based applications when a corresponding token expires that is assigned to a user to access said applications.

9. The server system of any one of claims 2 to 8, wherein said single sign-on module further comprises token identifiers for storing validated token identifiers for each authenticated user request.

10. The server system of Claim 7, wherein said authentication service module comprises logic to set said token identifiers in a hypertext transport protocol cookie header.

11. The server system of Claim 7, wherein said authentication service module further comprises logic to set said token identifiers in a hypertext transport protocol session.

12. A web-based applications single sign-on system, comprising:
a server comprising a centrally controlled Uniform Resource Locator system for accessing applications;
a plurality of web-based applications accessed via said centrally controlled URL system for accessing applications; and
a single sign-on access system coupled to said server for providing single sign-on access authentication and authorization to said plurality of web-based applications for a designated user.

13. The web-based applications single sign-on system of Claim 12, wherein said server further comprises an authentication service system for authenticating user access requests to said plurality of web-based applications.

14. The web-based applications single sign-on system of Claim 12 or 13, wherein said single sign-on access system comprises a sign-on token manager for providing unique token identifiers for said designated user on a first attempt that said user makes access to a particular application in said plurality of web-based applications.

15. The web-based applications single sign-on system of Claim 12, 13 or 14, wherein said single sign-on access system furkher comprises token providers for providing and encrypting said tokens identifiers and corresponding attributes for storage in an Internet based applications protocol.

16. The web-based applications single sign-on system of Claim 15, wherein said Internet based applications protocol is substantially compliant with a hypertext transport protocol.

17. The web-based applications single sign-on system of any one of claims 13 to 16, wherein said single sign-on access system further comprises token listening logic for notifying each of said plurality of web-based applications when a corresponding token expires that is assigned to a user to access said applications.

18. The web-based applications single sign-on system of any one of claims 13 to 17, wherein said single sign-on module further comprises token identifiers for storing validating token identifiers for each authenticated user request.

19. The web-based applications single sign-on system of Claim 16, wherein said server further comprises authentication logic for setting said token identifiers in a hypertext transport protocol cookie header.

20. The web-based applications single sign-on system of Claim 16, wherein said server further comprises authentication logic for setting said token identifiers in a hypertext transport protocol cookie session.

21. A method of providing single sign-on access to a plurality of web-based applications in a server, comprising:
receiving a user request to access a first application of said plurality of web-based applications by said server;
authenticating said user to allow access to said first application; and
assigning a sign-on token to said user after said user has successfully authenticated to access said first application, and wherein said token allows an authenticated user to access different applications of said plurality of web-based applications after being granted access to said first application without having to re-authenticate.

22. The method of Claim 21, wherein said assigning a sign-on token further comprises checking the status of said sign-on token to ensure said sign-on token has not expired.

23. The method of Claim 21 or 22, wherein said authenticating said user further comprises validating credentials of said user to ensure authorization of said user to access said first application.

24. The method of any one of claims 21 to 23, further comprising managing said token to support multiple and disparate token providers in said server.

25. The method of any one of claims 21 to 24, wherein said assigning a sign-on token to said user further comprises notifying said plurality of web-based applications when a particular token expires in order to terminate access granted to said user to said plurality of web-based applications.

26. A computer program comprising machine or computer-readable program elements for configuring a computer to implement an application of any one of claims 12 to 20 or the method of any one of claims 21 to 25.

27. A computer program carrier medium, configured to carry a computer program in accordance with claim 26.

28. A computer program product comprising the computer program carrier medium of claim 27 wherein the carrier medium comprises at least a one of the following set of media: a signal including an optical, electronic or rf signal, a magnetic disk or tape, solid-state memory, an optical readable and/or writeable disk, a compact disk and a digital versatile disk.
